Europäisches Patentamt

(19) European Patent Office

Office européen des brevets

(11) Publication number: **0 277 183 B1**

(12) **EUROPEAN PATENT SPECIFICATION**

(45) Date of publication of patent specification:
03.07.91 Bulletin 91/27

(51) Int. Cl.⁵ : **B23K 20/00**

(21) Application number: 87905195.1

(22) Date of filing: 05.08.87

(86) International application number:
PCT/DK87/00098

(87) International publication number:
WO 88/00872 11.02.88 Gazette 88/04

(54) **METHOD FOR JOINING OF METALS OR METAL ALLOYS BY COLD WELDING.**

(30) Priority: 06.08.86 DK 3765/86

(43) Date of publication of application:
10.08.88 Bulletin 88/32

(45) Publication of the grant of the patent:
03.07.91 Bulletin 91/27

(84) Designated Contracting States:
AT BE CH DE FR GB IT LI LU NL SE

(56) References cited:
DK-B- 145 330
US-A- 3 768 718

(73) Proprietor: DE CHIFFRE, Leonardo
Bronshojvej 6 A, 2 tv.
DK-2700 Bronshoj (DK)

(72) Inventor: DE CHIFFRE, Leonardo
Bronshojvej 6 A, 2 tv.
DK-2700 Bronshoj (DK)

(74) Representative: Birkeholm, Mogens et al
LARSEN & BIRKEHOLM ApS Europaeisk
Patentbureau P.O. Box 200
DK-2630 Taastrup (DK)

## Description

The invention relates to a method for joining two or more parts made out of metals or metal alloys, for example of dissimilar kinds, by cold welding, where the parts have mating surfaces having a straight line common generatrix, where a shaving or skiving of the surfaces is performed first and subsequently the surfaces are brought into mutual contact while a normal force is exerted between them.

An inconvenience existing in cold welding is that the parts have to be cleaned carefully immediately before the joining. Moreover, cold welding requires large material deformations. A method has been described aimed to solve this problem, where a previous machining of the surfaces to be joined together is performed in a vacuum chamber, where also the cold welding is carried out. It has been experienced that one can obtain good results in this way but it is obviously difficult to perform the machining as well as the cold welding in a vacuum chamber.

Such a method has been described by W.C. Sherwood and D.R. Milner in a paper in "Journal of the Institute of Metals" Vol 97, 1969.

In the same paper the authors also perform the machining followed by cold welding in the presence of air. The results show that bonding can be obtained at lower deformations than are required using conventional cold welding techniques, however, the deformations that are necessary in the presence of air are still considerably higher than the results under vacuum.

Furthermore, from the description of US-patent no. 3 768 718, a method and tool for cold welding is known to be performed as butt welding of massive metal wire ends, whereby the two ends are first sheared across, then brought together under a pressure load, and then are pressed together several times in such a way to make the material flow to such an extent that a ring of excess material is formed around the welding zone. This ring contains, among other things, the contaminants which might have been present on the surfaces that have been brought together, while the material which is present in the welding zone must be totally clean and never has been in contact with air, this being due to the flow which the material has been submitted to. The ring is subsequently cut off and the weld is perfect and consisting as mentioned of pure material.

Common for the known methods is that one has clearly realized the necessity that the surfaces which are to be cold welded must be very clean and not have been in contact with air for too long time.

According to the invention the method is characterized in performing the shaving of both surfaces to be cold welded by a movement bringing the surfaces in the direction of the generatrix together and by bringing with the same movement the surfaces further in sliding mutual contact using the sliding movement to cover both surfaces.

In this way, a simple method has been demonstrated by which one, to a great extent, can avoid that clean metal surfaces come into contact with air, and it has been experienced that perfect welds can be obtained in this way. According to the present invention, a normal force can be applied to the welding surface before the final position is reached. By having the two newly exposed surfaces pressed together, one can further improve the welding, since investigations have shown that even a short time contact between air and the fresh metal surfaces can decrease the quality of the weld.

It is therefore also clear that one can achieve, in some cases, a better weld quality if, according to the present invention, during the shaving one makes use of one or more methods known to improve a weld, e.g. heat, electric current or inert gas or by carrying out a subsequent heat treatment.

As known, cold welding is often used to join metals or metal alloys of different kinds, in which case one of the parts will often have higher hardness than the other part or parts. In such a case, according to the present invention, the part having the highest hardness can be used for shaving the other part or parts, i.e. the part which has the highest hardness is used as a tool. By so doing, the method is simplified.

If one needs to fasten a stud, insert or rivet into a hole, according to the present invention one can easily apply the method described letting the stud have higher hardness than the material where the hole is present, placing an external shaving tool over the hole, pressing the stud through the shaving tool and further down into the hole, and letting the stud obtain a section which is sligthly larger than the hole section, i.e. a somewhat larger diameter if the parts are of circular shape, and letting the stud receive a sharp edge all around its end, and pressing or striking on the stud at the end and contemporaneously exerting a resistance on the material surrounding the hole in order to provide circular stresses around the hole.

An advantageous embodiment of the present method is characterized by letting the stud have a height which is slightly larger than the height of the hole. By so doing one can achieve in a simple way a tight pressing and a perfect weld.

If one, according to the present invention, lets the hole pass through two or more sheets which are lying one over the other, and during the operation holds them in this position, it is possible to obtain a riveting of the sheets. Thus a method is actually shown for riveting with a rivet without protuberances, e.g. having no rivet head. It is indeed doubtful whether one should call this machine element a rivet, since a riveting in the pure sense of the term is not performed, but just a pressing or striking.

Finally, according to the present invention, stud and hole can be circular-cylindrical, naturally obtaining in this way an embodiment which is easy to establish.

The present invention is explained in more details in conjunction with the accompanying drawings, wherein

Fig. 1 shows two block shaped parts in start position before a welding,

Fig. 2 the two parts in final position after welding,

Fig. 3 a section in a portion of a sheet with a welded insert or stud,

Fig. 4 a section of a tool in starting position for welding of an insert or stud as shown in fig. 3,

Fig. 5 this tool in final position,

Fig. 6 a section in a portion of a sheet wherein a bushing has been welded,

Fig. 7 a section in a portion of two sheets which are joined by a welded stud,

Fig. 8 the same, but where the stud is hollow or has the shape of a bushing,

Fig. 9 a section in the end of a tube with a welded flange,

Fig. 10 a section in a tool to produce this tube end with flange, and

Fig. 11 a section in a tool for welding together strips or ribbons.

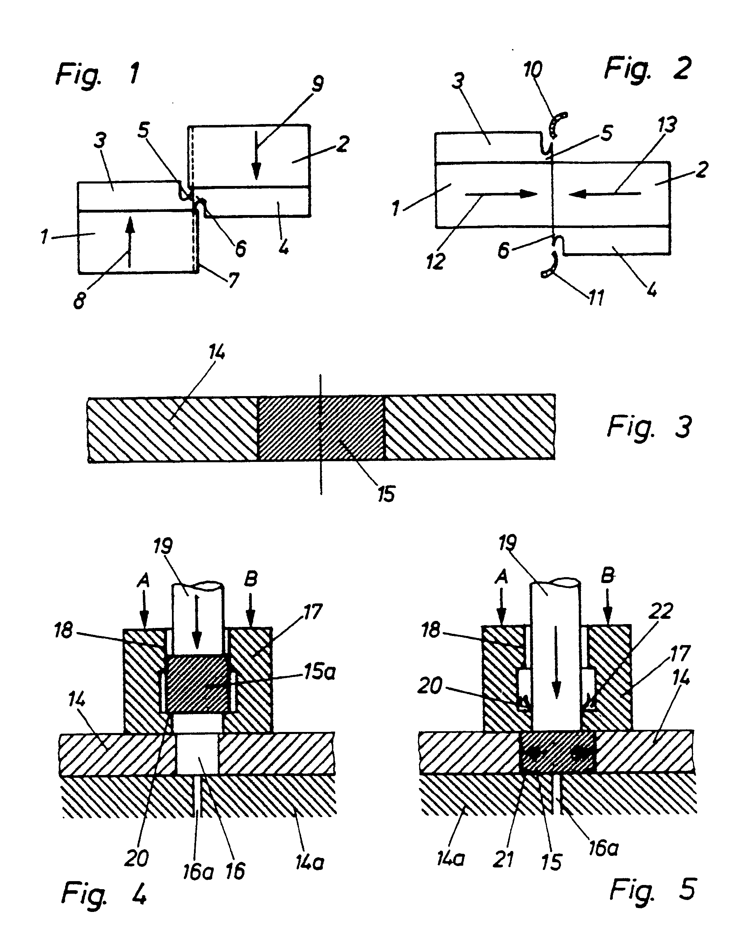

In fig. 1 are shown two metallic parts 1 and 2, where the first part 1 is provided on the upper side with a shaving tool 3 covering the whole width, while the second part 2 is provided in similar way on the lower side with a shaving tool 4. The cutting edges 5 and 6 are engaging each other, since the clearance angle is zero. The cutting edge 5 is positioned somewhat below the end surface 7 on part 1. When parts 1 and 2 are now moved sidewards with respect to each other as shown by the arrows 8 and 9, the cutting tools 3 and 4 will shave a chip from the end surfaces over the whole width at the same time as the cutting tools will cover the fresh surfaces, until these will slide over each other and cover in this way each other, as shown in fig. 2, where also two chips 10 and 11 are shown. If one thereafter presses the parts 1 and 2 against each other, as shown by the arrows 12 and 13, a cold weld is produced between the end surfaces. It is actually known that cold welding can produce welds between different metals or metal alloys. The same is valid using the method according to the present invention, which furthermore gives welds of very high quality.

Fig. 3 shows a section in a metal sheet 14 wherein a circular insert or stud 15 is welded, using the method according to the present invention. Such a metal sheet can be produced by using a tool 17, as shown in fig. 4 and 5. In fig. 4, the tool is shown in a starting position, where it has been aligned over the center of hole 16 in the sheet 14, which is laying on a base 14a. The tool 17 consist of a block which is provided with a through hole for aligning the stud 15a, having at the top a cylindrical guide wall 18 for the stud 15a and a punch 19 while being provided at the bottom with a cutting edge 20 with a clearance angle equal to zero. This cutting edge 20 has eventually a diameter which is slightly less than the diameter of the stud 15a and sligthly larger than the diameter of the hole 16. Actually, the tool is made of a material which is harder than the material of which is made the stud 15a. This material is on the other hand harder than the material of which is made the sheet 14. The height of the stud 15a is furthermore larger than the thickness of the sheet 14. The means of centering are not shown since they can be of any known kind. The same is valid for the fastening means which fasten the sheet 14 to the base 14a.

When the punch 19 is activated, the outer portion of the cylindric surface on the stud 15a will be shaved off during the downward movement. When the stud 15a comes into contact with the sheet 14, its diameter will still be slightly larger than the diameter of the hole 16 of the sheet 14 and, since the stud 15a has a higher hardness than the sheet 14, the continuing downward movement will result in shaving of the cylindrical surface of the hole 16, at the same time as the shaved surfaces slide in direct contact to each other, in such way that both surfaces at no time have been uncovered or exposed, having in this way not been in contact with air. Further downward movement of the punch 19 will lead to the end position shown in fig. 5, where the diameter of hole 16 has increased because the stud 15a had a larger height than the heigth of the hole 16. In this way, circular stresses have arised around the hole, which by due dimensioning can provide the pressure which is required to obtain a cold weld. It should be emphasized that it is important, at the same time as a downward force is exerted on the punch in the final step, also to exert a resistance on sheet 14, e.g. by pressing the tool downward as shown by the arrows A and B. By so doing, the circular stresses required are obtained, and undesired deformation around the hole is avoided. For the same purpose, the surface of the tool can be provided with slots or grooves. At the bottom side of the sheet 14 will a ring 21 of chips be present, which may be removed by grinding or milling. One can also imagine a circular slot in the base designed for reception of the ring 21 which consists of ring shaped chip material. This ring will appear as a bulb which can be removed easily. In the tool 17, a ring 22 of loose ring shaped chip will be present. If desired the tool can be designed with outlet slots for the ring shaped chip. Finally, one can imagine that the mentioned centering of tool 17 relative to hole 16 in sheet 14 is performed by providing the stud 15a with a downwards pointing protuberance which fits into the hole 16 in its original size.

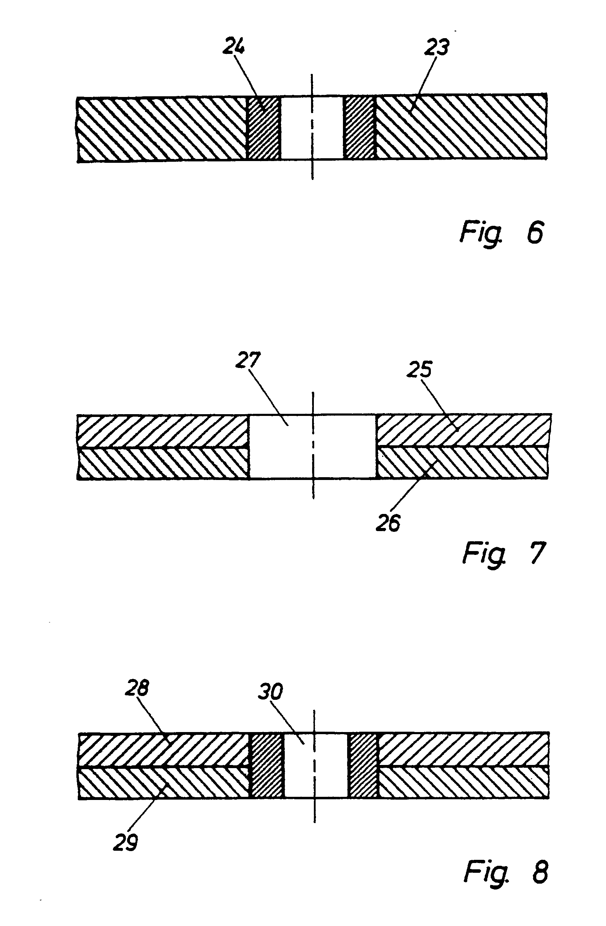

Fig. 6 shows a sheet 23 wherein a bushing 24 of another material has been welded. Such a sheet can be produced by using the tool shown in fig. 4 and 5, provided there is used a mandrel which fills out the hole in the bushing.

Fig. 7 shows two sheets 25 and 26 laying upon each other, wherein a stud 27 has been welded, in the same way as in fig. 3, and which in this way actually keeps the two sheets together as a rivet would have done it. In this way, a new method for joining sheets has been shown, where no protuberances are present as when rivets are used. This can be of importance e.g. in aircraft designing.

Fig. 8 shows a construction where two sheets 28 and 29 are held together by a bushing or a blind rivet for the production of which the same is valid as for the construction relative to fig. 6.

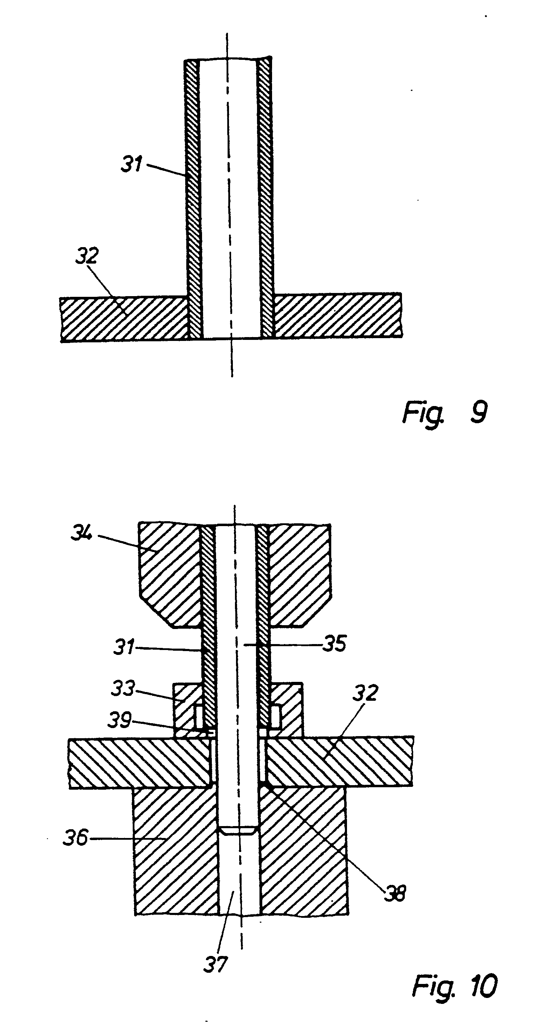

Fig. 9 shows a construction where a tube end 31 is welded to a flange 32 of another and thicker material.

Fig. 10 shows a tool for producing such a tube end with flange. The tool consists of a tool 33 as the one shown in fig. 4 and 5. Moreover are used a jaw 34, a mandrel 35 and a holder 36 with a hole 37 to accomodate the mandrel 35. The holder 36 is provided with a collar 38 to center the flange 32. The tool works in principle as the tool according to fig. 4 and 5. It should be pointed out, however, that if the tube end 31 is of a softer material than the flange 32, as it often will be the case if a hard flange is joined to a soft tube, it will be necessary to insert a ring on the mandrel 35 from below. This ring shall have the same inner and outer diameter as the tube 31 and a hardness which is higher than the hardness of the flange 32 and lower than the hardness of the tool 33. This ring is not shown on the drawing but it could e.g. fill the ring shaped cavity 39 which has in the main a quadratic section. This ring can also be imagined to be soldered to the tube end 31.

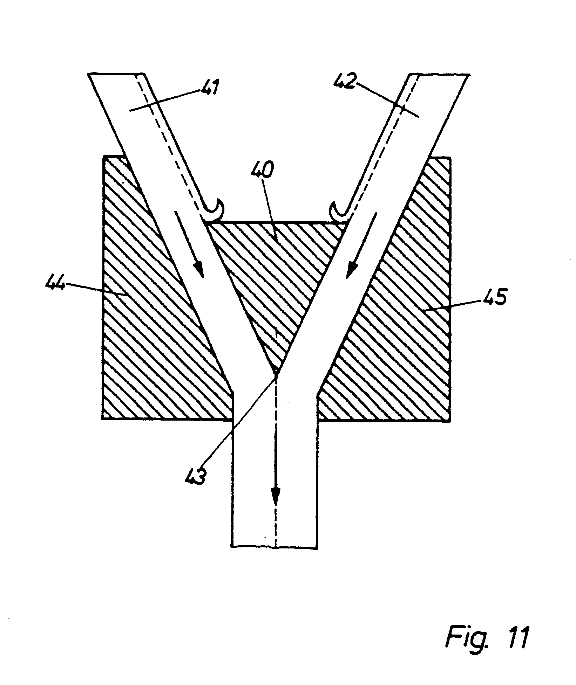

Fig. 11 shows a section in a tool for joining together strips or ribbons, e.g. bimetallic strips, where a shaving tool 40 having in the main a triangular section is kept stationary, while a strip 41 is moved along one of the sides in the triangle and another strip 42 is moved along another side in the triangle in such way to produce shaving at the two corners of the triangle of the two surfaces on strips 41 and 42, which run together at the third corner 43 of the triangle. The movement is produced by continuously exerting a pull on the two strips 41 and 42 and the compression is obtained by using pressure surfaces 44 and 45 at the outer side of strips 41 and 42 along the two sides of the triangle. These pressure surfaces could be replaced by rolls, entirely or in part. Also, pushing instead of pulling can be envisaged, to produce the movement.

An important fact is of course to perform a treatment which results in formation of fresh metal surfaces and that these surfaces in a sliding movement be kept covered until they, again in a sliding movement, are brought into mutual contact.

In the explanation of the invention, general workshop procedures as e.g. holding and centering have not been treated in details. Using the method, in principle two possibilities exist for controlling the force which is necessary to achieve a good weld. One can actually regulate the force by direct force measurement, e.g. by a hydraulic system of any known kind. Alternatively, one can also control the force by dimensioning of the different parts with tolerances and predetermined strokes, i.e. obtaining a control by pure geometrical magnitudes. The use of the term "stud" througout the whole description must be understood broadly, since it can be the case of an insert, part of an insert, a bushing or a rivet like part.

Also, the invention is not confined to through holes as shown in the examples. It will be possible to fasten the mentioned bushings and studs in a completely similar manner in blind holes.

## Claims

1. Method for joining two or more parts (1,2) of metal or metal alloys, for example of dissimilar kinds, by cold welding, where the parts (1, 2) have mating surfaces having a straight line common generatrix, where a shaving of the surfaces is performed first and subsequently the surfaces are brought into mutual contact while a normal force (12, 13) is exerted between them, **characterised** by performing the shaving of both surfaces to be cold welded by a movement bringing the surfaces in the direction of the generatrix together and by bringing with the same movement the surfaces further in sliding mutual contact using the sliding movement to cover both surfaces.

2. Method according to claim 1, **characterised** by exerting a normal force (12, 13) on the contact surface already before the final position has been reached.

3. Method according to claim 1 or 2, **characterised** by the use, during the shaving, of one or more means known per se for improving a weld, e.g. heat, electrical current or inert gas, or by performing a subsequent heat treatment.

4. Method according to claim 1, 2 or 3 and where one of the parts to be joined show a higher hardness than the other part or parts, **characterised** by the use of the part having the highest hardness to shave the other part or parts, i.e. the part having the highest hardness is used as one of the tools.

5. Method according to claim 4 to fasten a stud (15, 15a) into a hole (16), **characterised** by letting the stud (15, 15a) have higher hardness than the material wherein the hole (16) is placed, placing an external shaving tool (17) over the hole (16), pressing the stud (15) through the shaving tool (17) and down into the hole (16), letting the stud (15) receive a slightly larger section than the hole (16), i.e. a slightly larger diameter if both parts are circular, and letting the stud (15) receive a sharp edge all the way round, and thereafter pressing or striking the stud (15) and at the same time exerting a resistance on the material lying around the hole.

6. Method according to claim 5, **characterised** by letting the stud (15) have a height which is slightly larger than the height of the hole (16).

7. Method according to claim 5 or 6, **characterised** by letting the hole pass through two or more overlaying sheets (25, 26, 28, 29), holding the sheets in this position during the operation.

8. Method according to claim 5, 6 or 7, **characterised** by letting stud (15) and hole (16) be circular-cylindrical.

## Revendications

1. Procédé pour assembler deux ou plusieurs pièces (1, 2) en métal ou alliage métallique, par exemple de catégories différentes, par soudage à froid, dans lequel les pièces (1, 2) ont des surfaces d'assemblage présentant une génératrice rectiligne commune, dans lequel les surfaces sont d'abord arasées et les surfaces sont ensuite mises en contact en exerçant entre elles une force perpendiculaire (12, 13), caractérisé en ce qu'il consiste en l'exécution de l'arasage des deux surfaces à souder à froid grâce à un mouvement amenant les surfaces dans la direction de la génératrice commune et en amenant par le même mouvement les surfaces en contact mutuel de glissement en appliquant le mouvement de glissement aux deux surfaces.

2. Procédé selon la revendication 1, caractérisé en ce qu'il consiste en l'application d'une force perpendiculaire (12, 13) sur la surface de contact déjà avant que la position finale de la surface ait été atteinte.

3. Procédé selon la revendication 1 ou 2, caractérisé en ce qu'il consiste en l'emploi, au cours de l'arasage, d'un ou plusieurs moyens connus en eux-mêmes pour favoriser une soudure, par exemple de la chaleur, un courant électrique ou un gaz inerte, ou par l'application d'un procédé thermique ultérieur.

4. Procédé selon les revendications 1, 2 ou 3 dans lequel une des pièces à assembler présente une dureté supérieure à l'autre ou aux autres pièces, caractérisé en ce qu'il consiste en l'emploi de la pièce ayant la dureté la plus élevée pour araser l'autre ou les autres pièces, .c'est-à-dire que la pièce ayant la dureté la plus élevée est utilisée comme un des outils.

5. Procédé selon la revendication 4 utilisé pour fixer un goujon (15, 15a) dans un orifice (16), caractérisé par le fait que le goujon (15, 15a) a une dureté plus élevée que le matériau dans lequel l'orifice (16) est foré, par la mise en place d'un outil d'arasage (17) sur l'orifice (16), par une compression exercée sur le goujon (15) par l'intermédiaire de l'outil d'arasage (17) en le faisant pénétrer dans l'orifice (16), par le fait que le goujon (15) a une section légèrement supérieure à celle de l'orifice (16) c'est-à-dire un diamètre légèrement surpérieur si les deux pièces sont circulaires, et par le fait que le goujon (15) possède tout autour une arête vive et ensuite par une opération de compression du goujon (15) ou de frappe sur le goujon avec simultanément l'application d'une force sur le matériau entourant l'orifice.

6. Procédé selon la revendication 5, caractérisé par le fait que le goujon (15) possède une hauteur légèrement supérieure à la profondeur de l'orifice (16).

7. Procédé selon la revendication 5 ou 6, caractérisé par le fait que l'orifice traverse deux ou plusieurs couches superposées (25, 26, 28, 29) et que les couches sont maintenue dans cette position pendant l'opération.

8. Procédé selon les revendications 5, 6 ou 7, caractérisé par le fait que le goujon (15) et l'orifice (16) sont des cylindres circulaires.

## Ansprüche

1. Verfahren zum Verbinden zweier oder mehrerer Teile (1, 2) aus Metall oder Metallegierungen, zum Beispiel von unälichen Arten, durch Kaltschweißen, wobei die Teile (1, 2) zueinanderpassende Oberflächen mit einer geradlinigen gemeinsamen Generatrix aufweisen, und wobei zuerst ein Schabn der Oberflächen durchgeführt wird und darauffolgend die Oberflächen in gegenseitigen Kontakt gebracht werden, wähend eine Normalkraft (12, 13) zwischen ihnen ausgeübt wird, **gekennzeichnet durch** Ausführen des Schabens der beiden kaltzuschweißenden Oberflächen durch eine Bewegung, die die Oberflächen in der Richtung der Generatrix zusammenbringt, und durch Bringen der Oberflächen mit derselben Bewegung weiter in gegenseitigen Gleitkontakt unter Verwendung der Gleitbewegung, um beide Oberflächen abzudecken.

2. Verfahren nach Anspruch 1, **gekennzeichnet durch** Ausüben einer Normalkraft (12, 13) auf die Kontaktoberfläche bereits bevor die Endposition erreicht worden ist.

3. Verfahren nach Anspruch 1 oder 2, **gekennzeichnet durch** Verwendung, während des Schabens, von einem oder mehrerer Mittel, die als solche zur Verbesserung einer Schweißung bekannt sind, wie zum Beispiel Wärme, elektrischer Strom oder Inertgas, oder durch Ausführen einer nachfolgenden Wärmebehandlung.

4. Verfahren nach Anspruch 1, 2 oder 3, wobei eines der zu verbindenden Teile eine höhere Härte als das andere Teil oder die anderen Teile zeigt, **gekennzeichnet durch** Verwendung des Teils, welches die höchste Härte aufweist, um das andere Teil oder die anderen Teile zu schaben, d.h. das Teil, welches die höchste Härte aufweist, wird als eines der Werkzeuge verwendet.

5. Verfahren nach Anspruch 4, um einen Zapfen (15, 15a) in einem Loch (16) zu befestigen, **gekennzeichnet durch** Vorsehen, daß der Zapfen (15, 15a) eine größere Härte als das Material aufweist, worin das Loch (16) angeordnet ist, Plazieren eines äußeren Schabewerkzeugs (17) über dem Loch (16), Pressen des Zapfens (15) durch das Schabewerkzeug (17) und herunter in das Loch (16), Vorsehen, daß der Zapfen (15) einen geringfügig größeren Bereich als das Loch (16) einnimmt, d.h. einen geringfügig größeren Durchmesser, wenn beide Teile kreisringförmig sind, und Vorsehen, daß der Zapfen (15) rund herum einen scharfen Rand annimmt, und danach Pressen oder Schlagen des Zapfens (15) und zur gleichen Zeit Ausüben eines Widerstandes auf das um das Loch umliegende Material.

6. Verfahren nach Anspruch 5, **gekennzeichnet durch** Vorsehen, daß der Zapfen (15) eine Höhe aufweist, welche geringfügig größer als die Höhe des Loches (16) ist.

7. Verfahren nach Anspruch 5 oder 6, **gekennzeichnet durch** Vorsehen, daß sich das Loch durch zwei oder mehrere übereinanderliegende Schichten (25, 26, 28, 29) erstreckt, und durch Festhalten der Schichten in dieser Position während des Vorganges.

8. Verfahren nach Anspruch 5, 6 oder 7, **dadurch gekennzeichnet**, daß der Zapfen (15) und das Loch (16) rundzylindrisch sind.

Fig. 1

Fig. 2

Fig. 3

Fig. 4

Fig. 5

Fig. 6

Fig. 7

Fig. 8

31

32

Fig. 9

34

31          35

33

39          32

36          38

37

Fig. 10

Fig. 11